# EUROPÄISCHE PATENTSCHRIFT

(11) **EP 1 643 286 B1**
(45) Veröffentlichungstag und Bekanntmachung des Hinweises auf die Patenterteilung: **13.01.2010**
(21) Anmeldenummer: 05020543.4
(22) Anmeldetag: 21.09.2005
(51) Int. Cl.: G02B 21/06, G02B 7/00

(54) **Durchlichtbeleuchtung für Stereomikroskope**
Transillumination for stereo microscopes
Dispositif d'éclairage par transmission pour stéreomicroscopes

(30) Priorität: 01.10.2004 DE 102004048294
(43) Veröffentlichungstag der Anmeldung: 05.04.2006
(73) Patentinhaber: Carl Zeiss MicroImaging GmbH, 07745 Jena (DE)
(72) Erfinder: Hein, Detlef, 37083 Göttingen (DE); Duensing, Bernd, 37176 Nörten-Hardenberg (DE); Lang, Annette, 37073 Göttingen (DE)
(74) Vertreter: Scholze, Humbert

(56) Entgegenhaltungen:
- WO-A-03/058340
- DE-A1- 3 034 518
- GB-A- 1 147 455
- NL-C- 148 711
- US-A1- 2002 034 001
- US-A1- 2004 080 817

## Beschreibung

Die Erfindung betrifft ein Stereomikroskop mit einer Durchlichtbeleuchtung, insbesondere die Koppelung zwischen den manuell bedienbaren Bedienelementen und den zu bewegenden Funktionselementen der Durchlichteinrichtung.

In Stereomikroskopen werden neben der klassischen Auflichtbeleuchtung zunehmend auch Durchlichtbeleuchtungen eingesetzt. Bei diesen steht neben der Forderung nach geringer Bauhöhe zur Einhaltung einer ergonomischen Betrachtungs- und Bedienungshaltung auch die Variabilität der Beleuchtungseinstellung im Vordergrund. Diese variable Einstellbarkeit der Beleuchtung ist notwendig wegen des relativ großen Gesichtsfeldes und der Verschiedenheit der zu untersuchenden Materialien.
Ein Beispiel für eine solche Durchlichtbeleuchtungseinheit ist in der US 6,738,193 angegeben, auf deren Inhalt hiermit Bezug genommen wird.
In Durchlichteinrichtungen für Stereomikroskope wird deswegen mindestens eine Funktionsbaugruppe (z.B. ein Umlenkspiegel) in mindestens einer Bewegungsrichtung bewegt. Mit zunehmender Anzahl der geforderten Bewegungsmöglichkeiten bzw. der Freiheitsgrade eines einzelnen Bauteils wird die Kopplung zwischen den Bedienelementen und der Funktionsbaugruppe konstruktiv deutlich schwieriger, da sich die Koppelelemente einer Bewegungsrichtung ab der zweiten Bewegungsmöglichkeit bei einer Bewegung des Funktionselementes in eine andere Bewegungsrichtung entsprechend mitbewegen und sich somit überlagerte Bewegungen ergeben. Die Kopplung wird im Stand der Technik mit Hebeln, Stangen, Verzahnungen o.ä. durchgeführt. Aus Kostengründen und wegen der andernfalls schwierigen konstruktiven Gestaltung werden diese Koppelelemente häufig auch als kombiniertes Bedienelement benutzt. So wird z.B. häufig eine Stange als Koppel- und Bedienelement benutzt, die sowohl um ihre Achse gedreht, als auch entlang ihrer Achse geschoben und im Extremfall auch noch in einer oder mehreren Richtungen quer zu ihrer Achse verschoben werden kann. Die Bedienungsmöglichkeiten sind für viele Benutzer nur schwer zu erkennen, eine klare und für den Kunden eindeutige Kontrolle des eingestellten Beleuchtungszustandes ist hier üblicherweise nicht möglich. Somit entfällt hier auch die Möglichkeit der hinreichend genauen Reproduzierung einer als vorteilhaft angesehenen Beleuchtungseinstellung.
Meistens sind solche Konstruktionen auch sehr kostenintensiv, trotzdem ist es bisher nicht gelungen die Bedienelemente ergonomisch günstig anzuordnen.
Dadurch kommt es zu Anordnungen, die dem Benutzer das Arbeiten mit dem Stereomikroskop deutlich erschweren.

In der US 2002/034001 wurde vorgeschlagen, mittels eines flexiblen Kabels den Objektivrevolver eines Mikroskops mit einem Prisma zur Umschaltung zwischen Binokular- und Stereobetrachtung mechanisch so zu verbinden, dass bei Umschaltung des Objektivrevolvers das Prisma automatisch mit geschaltet wird.

Die GB 1 147 455 offenbart die Übertragung einer Schaltfunktion eines Bedienelementes eines Mikroskops auf das zu schaltende optische Element mittels Pneumatik, als mögliche Alternative wird ohne nähere Ausführung die Verwendung eines Bowdenzuges genannt.

Der Erfindung liegt die Aufgabe zugrunde, ein kostengünstiges Stereomikroskop mit einer Durchlichtbeleuchtung mit mehreren voneinander unabhängigen Bewegungsrichtungen bzw. Freiheitsgraden mindestens einer Funktionsbaugruppe zu realisieren, wobei die Bedienelemente für die Bewegung der Funktionsbaugruppe ergonomisch angeordnet sein sollen und hierfür eine möglichst vielseitig einsetzbare kostengünstige Lösung für die Gestaltung der Kopplung zwischen den Bedienelementen und der Funktionsgruppe zu entwickeln ist.

Die Aufgabe wird erfindungsgemäß durch die Merkmale des unabhängigen Anspruchs gelöst, vorteilhafte Weiterentwicklungen sind in den abhängigen Ansprüchen angegeben.

Die Genauigkeitsanforderungen an die Funktionselemente in einer Durchlichteinrichtung für Stereomikroskope sind verglichen mit den Genauigkeitsanforderungen an die abbildungsseitig einzusetzenden Funktionselemente geringer. Deshalb können für die erfindungsgemäße Seilzug-Konstruktion einfache kostengünstige Standard-Bowdenzüge benutzt werden. Selbstverständlich können auch Sonderbauformen aus hochflexiblen Bowdenzügen und/oder Bowdenzügen mit besonders geringen Reibungsverlusten eingesetzt werden. Durch die Flexibilität dieser Bowdenzüge wird die korrekte Koppelfunktion zwischen den Funktions- und den zugeordneten Bedienelementen auch bei einer Relativbewegung (durch die Bewegung des betreffenden Funktionselementes in eine andere Bewegungsrichtung) zwischen den Funktionselementen und den Bedienelementen nicht beeinträchtigt.

Ein Bowdenzug besteht normalerweise aus einem Seilzug und einer Bowdenzugumhüllung. Die erfindungsgemäße Gestaltung der Bowdenzugbetätigung sind umfasst vorzugsweise folgende Varianten:
Für einen Freiheitsgrad der Bewegung eines Funktionselementes werden zwei einzelne getrennte Bowdenzüge vorgesehen, die jeweils nur auf Zug beansprucht werden (wechselseitig bei hin- und rück-Bewegung).
Eine alternative Variante ist, dass für einen Freiheitsgrad der Bewegung eines Funktionselementes aus Kostengründen ein gemeinsamer Seilzug mit zwei einzelnen getrennten Bowdenzugumhüllungen vorgesehen ist, wobei der Seilzug zwischen den Bowdenzugumhüllungen einen Mitnehmer besitzt und er ab dem Mitnehmer einseitig hauptsächlich auf Zug beansprucht wird (wechselseitig bei hin- und rück-Bewegung). Der Mitnehmer kann z.B. am Bedienelement oder am Funktionselement befestigt sein.
Eine weitere Variante ist dadurch gekennzeichnet, dass für einen Freiheitsgrad der Bewegung eines Funktionselementes ein einzelner Bowdenzug mit einer Zugfeder als Rückholelement vorgesehen ist (wechselseitig bei hin- und rück-Bewegung). Die Zugfeder dient hier gleichzeitig auch als Ausgleich für Toleranzen und muß bei großen Verstellwegen eine entsprechend große wirksame Länge besitzen. Nachteilig hierbei ist die Notwendigkeit einer zusätzlichen Reib-Bremse, die für die vorstehenden Varianten durch die geringe Reibung der Bowdenzugbewegung nicht nötig ist. Durch die Feder-Bremse-Anordnung sind hierbei unterschiedlich hohe Betätigungskräfte für die hin- und rück-Bewegung erforderlich.

Die Erfindung wird im folgenden Anhand bevorzugter Ausführungsbeispiele erläutert.
Es zeigen
Fig. 1 eine schematische Darstellung der geometrischen Verhältnisse für die Bewegung eines Umlenkspiegels
Fig. 2 eine Anwendung zur Verschiebung eines optischen Elements in einer Koordinate
Fig. 3 eine Anwendung zur Verschiebung eines optischen Elements in zwei Koordinaten
Fig. 4 eine Anwendung zur Verkippung eines optischen Elements
Fig. 5 ein Justierelement
Fig. 6 ein weiteres Justierelement
Fig. 7 die schematische Darstellung einer Durchlichtbeleuchtung in einem Stereomikroskop

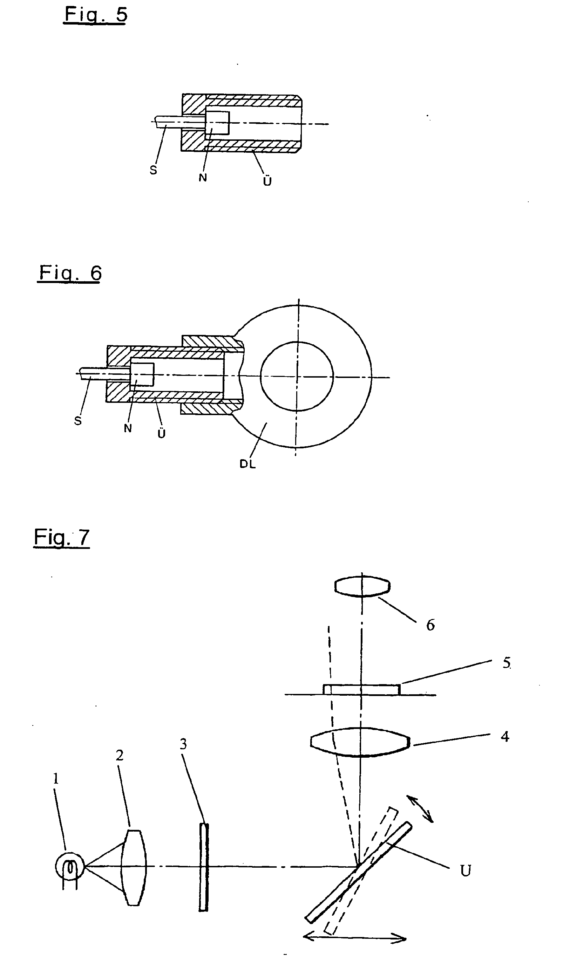

In Fig. 7 ist eine Durchlichtbeleuchtung eines Stereomikroskops schematisch dargestellt. Von einer Lichtquelle 1 wird das Licht über eine Kollektorlinse 2 und eine Streuscheibe 3 auf einen Umlenkspiegel U gerichtet. Nach der Umlenkung wird über eine Projektionslinse 4 das zu beobachtende Objekt 5 ausgeleuchtet. Das durch das Objekt 6 hindurchtretende Licht wird von einem Objektiv 6 aufgefangen und in hier nicht dargestellten Okularen ein vergrößertes Bild des Objektes 5 dargestellt. Dabei ist es zur Anpassung an die verschiedenen Objekte und Beobachtungsmethoden notwendig, das der Umlenkspiegel sowohl verschoben als auch verkippt werden kann, was durch die jeweiligen Pfeile angedeutet ist.

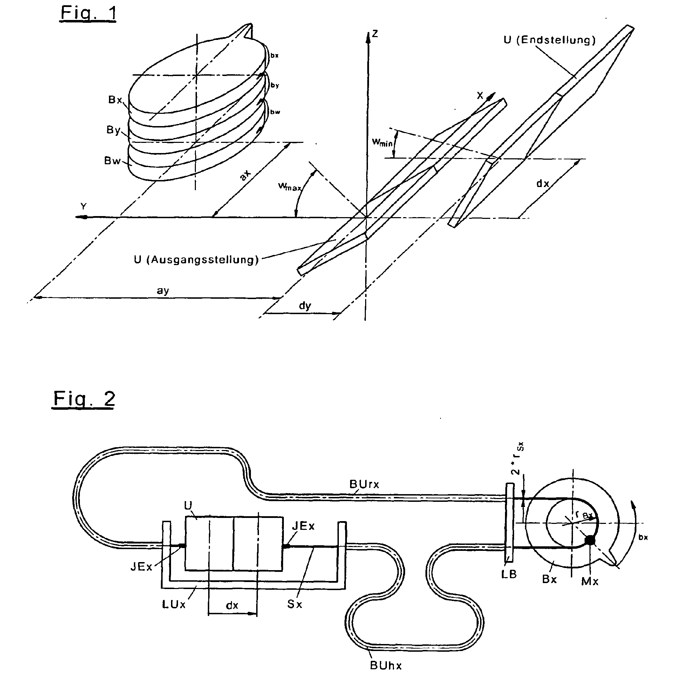

Fig. 1 zeigt als Ausführungsbeispiel eine optische Funktionsbaugruppe (Umlenkspiegel U), die durch die Drehung von drei gleichartigen Bedienelementen Bx, By und Bw unabhängig voneinander in mehreren Richtungen bewegt wird. Der Umlenkspiegel U weist beispielsweise Flächen mit unterschiedlichem Reflexionsvermögen auf. Die Drehung des Bedienelementes Bx um den Winkel bx bewirkt eine axiale Verschiebung des Umlenkspiegels U aus der Ausgangsstellung in Richtung der x-Achse zur Endstellung um den Betrag dx. Durch diese Verschiebung wird ein anderer Teil des Umlenkspiegels U mit unterschiedlichem Reflexionsverhalten wirksam, beispielsweise kann durch diese Verschiebung zwischen überwiegend gerichteter und überwiegend diffuser Reflexion umgeschaltet werden wobei beliebig viele Zwischenstellungen möglich sind.
Die Drehung des Bedienelementes By um den Winkel by erzeugt eine axiale Verschiebung des Umlenkspiegels U aus der Ausgangsstellung in Richtung der y-Achse zur Endstellung um den Betrag dy. Durch diese Verschiebung kann z.B. von der reinen Durchlicht-Hellfeld-Beleuchtung zu einer Durchlicht-Hellfeld-Beleuchtung mit zunehmendem Dunkelfeld-Anteil variiert werden, wobei wieder beliebig viele Zwischenstellungen möglich sind.
Die Drehung des Bedienelementes Bw um den Winkel bw bewirkt eine Kippung des Umlenkspiegels U aus der Ausgangsstellung mit einem maximalen Winkel wₘₐₓ zu einem minimalen Winkel wₘᵢₙ in der Endstellung. Durch diese Kippung wird z.B. eine zusätzliche Kontrastierungsmöglichkeit in Richtung Durchlicht-Dunkelfeld-Beleuchtung geschaffen, die besonders in Kombination mit der voneinander unabhängigen Variation der beiden anderen Bedienungselemente Bx und By zahlreiche zusätzliche effektive Beleuchtungsvarianten ermöglicht. Durch die geeignete Anordnung der Bedienelemente Bx, By und Bw relativ zum Benutzer ergibt sich eine ergonomisch günstige Bedienung. Im hier verwendeten Rechtssystem liegen die Bedienelemente Bx, By und Bw um die Beträge ax und ay von der Ausgangsstellung des Umlenkspiegels U entfernt. Außerdem ist die Bewegungsfunktion der Bedienelemente sofort ersichtlich und über eine Skalenteilung an den hinreichend großen Bedienelementen ist eine gute Reproduzierbarkeit der Einstellungen jederzeit gegeben.

Die Realisierung der genannten Verschiebungs- und Kippbewegungen wird anhand der Figuren 2 bis 4 näher erläutert.
Fig. 2 zeigt als Beispiel für die lineare Bewegungsmöglichkeit die Verstellung des in Fig. 1 beschriebenen Umlenkspiegels U in x-Richtung. Dieses Prinzip gilt auch für die Bewegung des Umlenkspiegels in y-Richtung und für andere Linearbewegungen von optischen Funktionselementen. Die Führungen für die Linearbewegung sind hier nicht dargestellt. Am Bedienelement Bx wird auf einem Durchmesser von 2*r_{Bx} ein Seilzug Sx geführt, der über einen aufgepreßten Mitnehmer Mx an einer Stelle mit dem Bedienelement Bx fest verbunden ist. Der Seilzug Sx hat den Durchmesser 2*r_{Sx}. Durch die Drehung des Bedienelementes Bx um den Winkel bx wird das eine Ende des Seilzuges Sx (vom Mitnehmer Mx aus gesehen) relativ zur Anbindung der flexiblen Bowdenzugumhüllungen BUhx und BUrx an der Lagerstelle LB um den Betrag |dx| = 2*(r_{Bx}+r_{Sx})*Pi* |bx| /360° verlängert und das andere Ende um denselben Betrag verkürzt. Das Lagerelement LB ist ortsfest positioniert, während das Lagerelement LUx durch die Flexibilität der Bowdenzüge prinzipiell in verschiedene Richtungen bewegt werden kann. Unabhängig von diesen zusätzlichen Bewegungsmöglichkeiten ergibt sich jedoch durch die Drehung des Bedienelementes Bx um den Winkel bx auch zwischen der Lagerstelle LUx und dem Umlenkspiegel U immer eine Relativbewegung mit demselben zuvor errechneten Betrag |dx|.

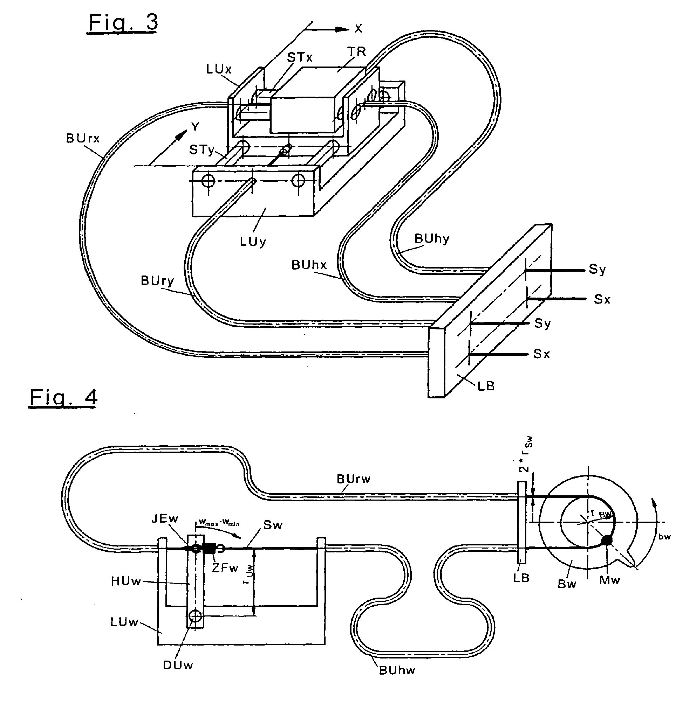

In Fig. 3 ist ein Ausführungsbeispiel für Bewegungen in zwei Koordinaten dargestellt: es soll der Umlenkspiegel U durch die Drehung des Bedienelementes Bx in Richtung der x-Achse linear verstellt werden und durch die davon unabhängige Drehung eines weiteren Bedienelementes By linear in der dazu senkrechten y-Achse. Hierfür wird unter dem Lagerelement LUx ein weiteres um 90° gedreht angeordnetes und über eine Stangenführung STy in y-Richtung mit dem Lagerelement LUx verbundenes Lagerelement LUy angeordnet, das hinsichtlich der Bowdenzugkonstruktion analog zum Lagerelement LUx aufgebaut ist. Über die Drehung des Bedienelementes By wird die gesamte über der Lagerstelle LUy angeordnete Baugruppe (Lagerstelle LUx mit angedeutetem Träger TR für den Umlenkspiegel U) in der y-Richtung bewegt, die flexiblen Bowdenzüge BUhx und BUrx folgen dieser Bewegung ohne eine unzulässige Bewegung in x-Richtung zu erzeugen. Auf dem angedeuteten Trägerteil TR kann eine weitere Bewegungsrichtung (z.B. die Kippung des Umlenkspiegels U gemäß Fig. 1 nach dem prinzipiellen Aufbau gemäß Fig. 4) realisiert werden. Falls erforderlich lassen sich auch mehrere ineinander geschachtelte bzw. überlagerte Bewegungen nach dem o.g. Prinzip verwirklichen, es gibt keine Begrenzung für die Anzahl der überlagerten Bewegungsrichtungen. Die Absolutposition des Umlenkspiegels ergibt sich aus den überlagerten Relativbewegungen. Durch das Legen von geeigneten Schlaufen kann die Flexibilität der Bowdenzüge noch verbessert werden.
An den beiden Enden des Seilzuges Sx werden Justierelemente JEx vorgesehen, die eine Spannung des Seilzuges Sx und eine exakte Justierung der Ausgangsposition des Umlenkspiegels U ermöglichen.
Diese Justierelemente JEx sind in Fig. 5 dargestellt: auf den Enden des Seilzuges S wird nach der Montage einer Überwurfhülse Ü jeweils ein Nippel aufgepreßt. Die Überwurfhülse Ü trägt ein Außengewinde, das in das bewegte Funktionselement (z.B. in das Lagerelement LUx in Fig. 3) geschraubt wird. Durch die Gewindesteigung wird die Drehung der Überwurfhülse Ü in eine Axialbewegung transformiert, wobei der Seilzug durch den fehlenden Formschluß nicht unzulässig aufgedrillt werden kann.

In Fig. 4 ist die Kippung des Umlenkspiegels U aus der Ausgangsstellung mit dem Winkel Wₘₐₓ in die Endstellung mit dem Winkel Wₘᵢₙ als Beispiel für eine nichtlineare Rotationsbewegung dargestellt. Durch die Drehung des Bedienelementes Bw um den Winkel bw wird das eine Ende des Seilzuges Sw (vom Mitnehmer Mw aus gesehen) relativ zur Anbindung der flexiblen Bowdenzugumhüllungen BUhw und BUrw an der Lagerstelle LB um den Betrag 2*(r_{Bw}+r_{Sw})*Pi*| bw |/360° verlängert und das andere Ende um denselben Betrag verkürzt. Abweichend zur Darstellung in Fig. 2 wird der Umlenkspiegel U bzw. der Hebel HUw am in Fig. 4 nicht dargestellten Umlenkspiegel U durch die Bewegung des Seilzuges Sw (im Abstand r_{Uw} von der Drehachse DUw) relativ zur Drehachse DUw gedreht bzw. gekippt. Die durch die Drehung des Bedienelementes Bw um den Winkel bw verursachte Bewegung des Seilzuges Sw erzeugt auf diese Weise eine Variation des Winkels am Umlenkspiegel U um den Betrag | wₘₐₓ-wₘᵢₙ |. Aufgrund des Versatzes bzw. der Schiefstellung des Seilzuges Sw bei Drehung des Hebels HUw um die Drehachse DUw erfolgt die Drehung unlinear. Aus diesem Grund wird hier eine ausgleichende Zugfeder ZFw vorgesehen, die bei der Bewegung auftretende Längenänderungen des Seilzuges Sw kompensiert. Die Zugfeder ZFw wird so dimensioniert, dass ihre Zugkraft auch bei ihrer kürzesten Länge noch deutlich größer ist, als die maximal auftretende Betätigungskraft im Seilzug Sw. Dadurch wird eine verzögerungsfreie Bewegung gewährleistet. Zur Justierung wird hier nur ein Justierelement JEw benötigt, da die Zugfeder ZFw automatisch für eine Spannung des Seilzuges Sw sorgt. Das hier benötigte Justierelement ist in Fig. 6 dargestellt: aufgrund der Drehung des Umlenkspiegels U bzw. des Hebels HUw würde der Seilzug Sw ohne weitere Maßnahmen bei der Bewegung unzulässig geknickt werden. Deshalb wird das in Fig. 5 dargestellte und vorab beschriebene Justierelement in ein drehbares Lager DL geschraubt, das ein Abknicken durch die mögliche Drehung unmöglich macht.

Die Seilzüge der eingesetzten Bowdenzüge können teilweise auch auf Rollen gerührt werden, die aber relativ zur Anbindung der Seilzüge am zugeordneten Funktionselement oder am zugeordneten Bedienelement feststehen. Hierdurch wird die Flexibilität der Anordnung noch erhöht, da der sonst erforderliche minimale Biegeradius der Bowdenzugumhüllung an der Einsatzstelle einer Umlenkrolle aufgrund der dort fehlenden Bowdenzugumhüllung nicht beachtet werden braucht (nur der Seilzug wird dort gekrümmt, der minimal mögliche Biegeradius des Seilzugs allein ist sehr viel kleiner). Für die meisten Fälle kann jedoch auf solche Umlenkrollen verzichtet werden, da der minimal zulässige Radius der kostengünstigen Standard-Bowdenzüge hinreichend klein ist. Die Flexibilität der Bowdenzüge ermöglicht somit die Anbringung bzw. Betätigung der Bedienelemente an nahezu jedem gewünschten ergonomisch günstigen oder sonstigem vorteilhaften Ort.

Mit einer geeigneten Anordnung der Bowdenzüge sind erfindungsgemäß beliebige Transformationen der Bewegung an den Bedienelementen in Bewegungen der Funktionselemente möglich.

Die erfindungsgemäßen Bowdenzug-Lösungen lassen sich auch zur Kopplung zwischen Funktionselementen anwenden, indem die Verschiebung, Drehung oder Verkippung eines Funktionselementes mittels Seilzug auf ein weiteres Funktionselement übertragen wird.

## Patentansprüche

1. Stereomikroskop mit einer Durchlichtbeleuchtung, welche aus einer Lichtquelle (1) und verstellbaren oder bewegbaren optischen Funktionselementen (11) wie Linsen, Spiegel u.ä. besteht, wobei zum Zwecke der Bewegungsausführung der Funktionselemente Bedienelemente (Bx, By, Bw) sowie Koppelelemente vorgesehen sind und einem der optischen Funktionselemente zum Zwecke der Ausführung wenigstens zweier unabhängiger Bewegungen mindestens 2 Bedienelemente zugeordnet sind,
**dadurch gekennzeichnet, dass** zwischen den genannten mindestens zwei Bedienelementen und dem zu bewegenden / zu verstellenden optischen Funktionselement als Koppelelement jeweils mindestens ein Bowdenzug angeordnet ist.

2. Stereomikroskop mit einer Durchlichtbeleuchtung nach Anspruch 1, **dadurch gekennzeichnet, dass** die Übertragung der Bewegung der Bedienelemente auf die Funktionselemente durch die Bowdenzüge in einer Auswahl aus der Gruppe (winkelgetreu, linear, direkt proportional, nicht winkelgetreu, nicht linear, indirekt proportional) erfolgt.

3. Stereomikroskop mit einer Durchlichtbeleuchtung nach einem der Ansprüche 1 oder 2,
**dadurch gekennzeichnet, dass** für mindestens einen Freiheitsgrad der Bewegung eines Funktionselementes zwei einzelne getrennte Bowdenzüge vorgesehen sind, die jeweils nur auf Zug beansprucht werden.

4. Stereomikroskop mit einer Durchlichtbeleuchtung nach einem der Ansprüche 1, 2 oder 3,
**dadurch gekennzeichnet, dass** die bewegten Funktionselemente optisch wirksame Elemente wie Spiegel, Linsen, Blenden, geordnete oder ungeordnete Lichtleitfasern, Filter sind.

5. Stereomikroskop mit einer Durchlichtbeleuchtung nach einem der Ansprüche 1, 2, 3 oder 4,
**dadurch gekennzeichnet, dass** ein Seilzug des Bowdenzuges am Bedienelement und/oder am Funktionselement auf einem Umfang abrollt und dass mindestens ein Bedienelement eine Skala zum Ablesen der Einstellung und/oder definierten Einstellen des optischen Funktionselementes aufweist.

## Claims

1. Stereomicroscope having a transmitted-light illumination system comprising a light source (1) and adjustable or moveable optical functional elements (U) such as lenses, mirrors or the like, wherein for the purposes of movement guidance of the functional elements operating elements (Bₓ, B_{y}, B_{w}) and coupling elements are provided and at least two operating elements are associated with one of the optical functional elements for the purpose of executing at least two independent movements, **characterized in that** at least one Bowden cable assembly is arranged as a coupling element between said at least two operating elements and the optical functional elements to be moved/to be adjusted.

2. Stereomicroscope having a transmitted-light illumination system according to Claim 1, **characterized in that** the movement of the operating elements is transferred to the functional elements by way of the Bowden cable assemblies in a selection from the group (conformal, linear, directly proportional, non-conformal, non-linear, indirectly proportional).

3. Stereomicroscope having a transmitted-light illumination system according to Claim 1 or 2, **characterized in that** for at least one degree of freedom of the movement of a functional element two individual separate Bowden cable assemblies are provided, which are each subjected only to tensile loading.

4. Stereomicroscope having a transmitted-light illumination system according to Claim 1, 2 or 3, **characterized in that** the moving functional elements are optically active elements such as mirrors, lenses, apertures, ordered or non-ordered optical waveguides, filters.

5. Stereomicroscope having a transmitted-light illumination system according to Claim 1, 2, 3 or 4, **characterized in that** one cable of the Bowden cable assembly rolls on a circumference of the operating element and/or functional element and **in that** at least one operating element has a graduation for reading the adjustment and/or for adjusting in a defined manner the optical functional element.

## Revendications

1. Microscope stéréoscopique à éclairage par lumière transmise qui se compose d'une source de lumière (1) et d'éléments fonctionnels optiques (µ) positionnables ou mobiles comme des lentilles, des miroirs et similaires, des éléments de commande (Bx, By, Bw) ainsi que des éléments de couplage étant prévus en vue d'exécuter les mouvements des éléments fonctionnels et au moins 2 éléments de commande étant associés à l'un des éléments fonctionnels optiques en vue d'exécuter au moins deux mouvements indépendants, **caractérisé en ce qu'**au moins un câble Bowden est à chaque fois disposé en tant qu'élément de couplage entre lesdits au moins deux éléments de commande et l'élément fonctionnel optique à déplacer / à positionner.

2. Microscope stéréoscopique à éclairage par lumière transmise selon la revendication 1, **caractérisé en ce que** la transmission du mouvement des éléments de commande aux éléments fonctionnels est réalisée par le biais des câbles Bowden dans une sélection parmi le groupe (isogonal, linéaire, proportionnel direct, non isogonal, non linéaire, proportionnel indirect).

3. Microscope stéréoscopique à éclairage par lumière transmise selon l'une des revendications 1 ou 2, **caractérisé en ce que** deux câbles Bowden individuels séparés, lesquels ne subissent respectivement qu'une contrainte de traction, sont prévus pour au moins un degré de liberté du mouvement d'un élément fonctionnel.

4. Microscope stéréoscopique à éclairage par lumière transmise selon l'une des revendications 1, 2 ou 3, **caractérisé en ce que** les éléments fonctionnels déplacés sont des éléments optiquement actifs tels que des miroirs, des lentilles, des diaphragmes, des fibres optiques ordonnées ou non ordonnées, des filtres.

5. Microscope stéréoscopique à éclairage par lumière transmise selon l'une des revendications 1, 2, 3 ou 4, **caractérisé en ce que** qu'un tirant à câble du câble Bowden se déroule sur un pourtour de l'élément de commande et/ou de l'élément fonctionnel et qu'au moins un élément de commande présente une graduation pour lire le réglage et/ou réaliser un réglage défini de l'élément fonctionnel optique.
